# EUROPÄISCHE PATENTANMELDUNG

(11) **EP 0 761 181 A2**
(43) Veröffentlichungstag der Anmeldung: **12.03.1997**
(21) Anmeldenummer: 96113354.3
(22) Anmeldetag: 21.08.1996
(51) Int. Cl.: A61C 17/20, A61C 17/02

(54) **Vorrichtung zum Entfernen von Zahnbelägen**

(30) Priorität: 23.08.1995 DE 19531062
(71) Anmelder: Planert, Jens, Dr. med dent., 37083 Göttingen (DE)
(72) Erfinder: Planert, Jens, Dr. med dent., 37083 Göttingen (DE)
(74) Vertreter: Patentanwälte Rehberg + Hüppe

(57) **Zusammenfassung**

Als Vorrichtung zum Entfernen von Zahnbelägen dient ein Reinigungslöffel (5), der individuell den geometrischen Bedingungen im Mund angepaßt ist und dessen Randbereich mit einer Dichtung (9) versehen ist. Der Reinigungslöffel (5) weist im Bereich der zu reinigenden Flächen (12) einen Aufnahmeraum (10) für ein Reinigungsmittel (11) auf. Es ist ein Antrieb für die Aufbringung einer Bewegung auf das Reinigungsmittel (11) relativ zu den zu reinigenden Flächen (12) vorgesehen.

## Beschreibung

Die Erfindung betrifft eine Vorrichtung zum Entfernen von Zahnbelägen.

Die tägliche Pflege der Zähne ist ein lange bekanntes Problem. Dabei geht es in erster Linie um die Entfernung von Zahnbelägen, insbesondere Plaque, in denen sich Bakterien ansiedeln, die letztlich den Zahn und sein Haltegewebe angreifen. Auch die Entstehung und Ablagerung von Zahnstein findet in diesen Zahnbelägen statt. Werden die Zahnbeläge bei der täglichen Zahnpflege nur unzureichend entfernt, so kommt es früher oder später im menschlichen Leben zu einem Angriff auf die Zähne und letztlich zu ihrer Zerstörung.

Als Vorrichtung zum Entfernen von Zahnbelägen sind zunächst einmal Zahnbürsten in den verschiedensten Ausführungen bekannt. Solche Zahnbürsten weisen in der Regel einen Grundkörper auf, an welchem in irgendeiner Form Borsten vorgesehen sind. Der Grundkörper kann eine gerade, gestreckte Gestalt, aber auch abgewinkelte Form besitzen. Er endet in der Regel in einem Handgriff, der der Handhabung der Zahnbürste dient. Auf die Borsten der Bürste wird in bekannter Weise ein Zahnputzmittel aufgetragen. Durch kreisende und/oder mehr oder weniger geradlinige Bewegungen in einer Richtung versucht man, die Zahnbeläge zu lösen und zu entfernen. Neben den manuellen Zahnbürsten gibt es auch elektrische Zahnbürsten, bei denen die Borsten entweder eine hin- und herschwingende Bewegung oder aber auch eine kreisende Bewegung ausführen. Bekanntlich gelingt die Entfernung des Zahnbelages nur in unvollkommener Weise, weil die Zahnbürste nur einen Teil der zu reinigenden Flächen erreicht. So verbleiben die Zahnzwischenräume, die an sich die stärkste Gefährdung darstellen, weitgehend ungereinigt. Auch ist die Reinigungswirkung weitgehend von der Geschicklichkeit der jeweiligen Person abhängig.

Um die Zahnzwischenräume reinigen zu können, sind sog. Interdentalraumbürsten bekannt, deren Grundkörper im wesentlichen aus einem dünnen Draht bestehen, an dessen einem Ende einige kurze Borsten befestigt sind. Diese Interdentalraumbürsten gibt es in verschiedenen Größen, um die jeweiligen Zahnzwischenräume zu erreichen. Auch die Benutzung von Zahnseide oder Zahnstochern dient der Reinigung der Zahnzwischenräume.

Der Erfindung liegt die Aufgabe zugrunde, eine Vorrichtung zum Entfernen von Zahnbelägen zu schaffen, die wirkungsvoller und verläßlicher arbeitet als die bisher bekannten Vorrichtungen. Dabei geht es insbesondere darum, auch die gefährdeten Zahnzwischenräume zu erreichen.

Erfindungsgemäß wird dies bei einer Vorrichtung der eingangs beschriebenen Art dadurch erreicht, daß ein Reinigungslöffel vorgesehen ist, der individuell den geometrischen Bedingungen im Mund angepaßt ist und dessen Randbereich mit einer Dichtung versehen ist, daß der Reinigungslöffel im Bereich der zu reinigenden Flächen einen Aufnahmeraum für ein Reinigungsmittel aufweist, und daß ein Antrieb für die Aufbringung einer Bewegung auf das Reinigungsmittel relativ zu den zu reinigenden Flächen vorgesehen ist.

Die Erfindung geht von dem Gedanken aus, die Zähne des Oberkiefers und/oder Unterkiefers auf einmal, also in einem Gesamtvorgang, zu reinigen und nicht mehr örtlich mehr oder weniger geschickt an einzelnen Zähnen zu putzen. Dabei gelangt ein Reinigungslöffel zur Anwendung, also ein individuell den jeweiligen geometrischen Bedingungen des Patienten im Mund angepaßtes Gerät, welches die jeweilige Zahnreihe dichtend umschließt. Die Dichtung ist erforderlich, um in einem Aufnahmeraum ein Reinigungsmittel, also insbesondere eine Flüssigkeit, ein Gel, eine Paste oder dgl. aufzunehmen. Der Aufnahmeraum umgibt dabei die Zähne in einem gewissen Abstand, so daß das Reinigungsmittel an die zu reinigenden Flächen der Zähne, einschließlich in die Zahnzwischenräume, gelangen kann. Das Reinigungsmittel wird über einen Antrieb in Bewegung gesetzt, so daß es eine Bewegung relativ zu den zu reinigenden Flächen ausübt, dabei Beläge löst und abtransportiert und so immer wieder frisches Reinigungsmittel an die zu reinigenden Flächen herangebracht wird. Dies hat den Vorteil, daß selbst die Zahnzwischenräume mit der erforderlichen Intensität gereinigt werden, also jeder Zahn gleichsam eine Rundumreinigung erfährt.

Als Antrieb für die Aufbringung einer Bewegung auf das Reinigungsmittel relativ zu den zu reinigenden Flächen kann ein Ultraschallschwinger oder eine Pumpe vorgesehen sein. Die Art des Reinigungsmittels und die Art des Antriebes sind aufeinander abgestimmt. So eignet sich ein Ultraschallschwinger, der beispielsweise aus mehreren piezokeramischen Elementen bestehen kann und in bekannter Weise mit Energie versorgt wird, in Verbindung mit einem Gel. Das Gel wird in den Aufnahmeraum des Reinigungslöffels eingebracht, beispielsweise eingestrichen, und muß eine solche Konsistenz aufweisen, daß es, insbesondere bei der Pflege der Zähne des Unterkiefers, von selbst nicht aus dem Aufnahmeraum herausläuft. Als Reinigungsmittel kann auch eine Flüssigkeit eingesetzt werden, die mit einer Pumpe in Umlauf gehalten wird, wobei die Flüssigkeit zweckmäßig durch Düsen in dem Reinigungslöffel, die im Aufnahmeraum enden, in Richtung auf die Zähne zum Ausströmen gebracht wird. Hierbei ist es zweckmäßig, die Flüssigkeit erst dann einzuleiten, wenn zuvor der Reinigungslöffel im Mund bzw. am Kiefer aufgesetzt worden ist. Da der Reinigungslöffel dem Menschen individuell anzupassen ist, besteht hier auch die Möglichkeit, durch die Anordnung und Richtung der Düsen darauf hinzuwirken, daß bevorzugt gefährdete Stellen an den Zähnen wirkungsvoller gereinigt werden als frei zugängliche Oberflächen, die ohnehin einer Reinigungswirkung unterliegen.

Der Antrieb für die Aufbringung einer Bewegung auf das Reinigungsmittel relativ zu den zu reinigenden Flächen kann mit dem Reinigungslöffel dauerhaft verbunden oder an diesen anschließbar sein. Insbesondere bei Verwendung einer Pumpe wird diese ein außerhalb des Mundes anzuordnendes Aggregat sein, welches über entsprechende Leitungen mit dem Reinigungsmittel verbunden ist. An die Pumpe kann zweckmäßig auch ein Reservoir für Reinigungsflüssigkeit angeschlossen sein. Damit ist es möglich, den Reinigungslöffel vergleichsweise flach und wenig aufbauend auszubilden.

Der Aufnahmeraum für das Reinigungsmittel kann die zu reinigenden Flächen mit geringem Abstand umschließen. Der Abstand sollte so gewählt werden, daß im Aufnahmeraum um die zu reinigenden Flächen herum die erforderliche Bewegung des Reinigungsmittels ungestört ablaufen kann, aber andererseits die Elemente des Antriebes für das Reinigungsmittel wirkungsvoll zum Einsatz kommen.

Es besteht die Möglichkeit, daß der Reinigungslöffel als Kunststofformkörper ausgebildet ist und die Dichtung aus einer umlaufend angeordneten Lippe aus dauerelastischem Kunststoff, insbesondere Silikon, besteht. Ein solcher Kunststofformkörper, insbesondere aus thermoplastischem Kunststoff, ermöglicht eine einfache und genaue Anpassung an die Geometrie des Mundes und des Kiefers des Patienten. Er wird im Mund als angenehm empfunden und läßt sich selbst auch vergleichsweise leicht reinigen und sauberhalten. Die Dichtung sollte aus einem dauerelastischen Kunststoff bestehen, der nur eine geringe Anpressung für die Erreichung der Dichtheit benötigt. Die Anpressung kann ohne weiteres über den jeweils anderen Kiefer herbeigeführt werden, wobei es auch sinnvoll erscheint, am Reinigungslöffel auf der dem zu reinigenden Kiefer abgewandten Seite eine Formgebung aufzubringen, die eine reproduzierbare Lage des Reinigungslöffels ermöglicht. In vielen Fällen dürfte es genügen, eine Abstimmung auf die beiden Eckzähne vorzunehmen. Wichtig ist noch, daß die Dichtung als umlaufende Lippe vorgesehen ist, damit der Aufnahmeraum für das Reinigungsmittel nach allen Seiten abgeschlossen ist.

Es kann ein Reinigungslöffel für den Oberkiefer und ein Reinigungslöffel für den Unterkiefer vorgesehen sein. Damit wird die Reinigung der Zähne in zwei Schritte unterteilt. Dies hat den Vorteil, daß sich der einzelne Reinigungslöffel leichter handhaben, insbesondere in den Mund einführen läßt. Es erscheint aber auch nicht ausgeschlossen, einen einzigen Reinigungslöffel anzuwenden, der eine gleichzeitige Reinigung der Zähne des Oberkiefers und des Unterkiefers ermöglicht.

Als Reinigungsmittel kann eine Flüssigkeit, ein Gel, eine Paste oder eine Mischung daraus Verwendung finden. Die Art des Reinigungsmittels ist auf die Art des Antriebes abgestimmt. Dabei muß einerseits die Bedingung erfüllt werden, daß das Reinigungsmittel in den Aufnahmeraum eingebracht werden kann. Andererseits muß es bei der Anwendung eine Bewegung relativ zu dein Reinigungslöffel ermöglichen. Das Reinigungsmittel kann unmittelbar reinigende Wirkung haben, also z. B. Enzyme, organische Lösungsmittel oder dgl. enthalten, und/oder als ultra-schallübertragendes Medium im Sinne der Erzeugung einer Kavitationswirkung an den Zahn- und Schleimhautgrenzflächen wirksam sein.

Der Reinigungslöffel kann Kammern und Kanäle für die Umwälzung des Reinigungsmittels sowie Düsen für das gezielte Zuleiten des Reinigungsmittels auf die zu reinigenden Flächen aufweisen, die mit dein Aufnahmeraum in Verbindung stehen. Dabei besteht auch die Möglichkeit, den Aufnahmeraum entsprechend unterschiedlich zu gestalten, also unterschiedliche Abstände zu den zu reinigenden Flächen an den einzelnen Zähnen zu realisieren, um die Intensität der Reinigungswirkung anzupassen und die gewünschte Bewegung des Reinigungsmittels zu begünstigen.

Es gibt verschiedene Möglichkeiten, den Antrieb des Reinigungsmittels zu realisieren. Auf dem Reinigungslöffel können Piezokristalle für die Aufbringung einer Bewegung auf das Reinigungsmittel relativ zu den zu reinigenden Flächen angeordnet sein. Damit wird mittels Ultraschall eine Bewegung auf das Reinigungsmittel übertragen. Die dabei zurückzulegenden Wege sind relativ klein, so daß eine effektive Reinigungswirkung eintritt. Es ist aber auch möglich, daß der Reinigungslöffel aus magnetostriktivem Material besteht oder zumindest solche Bereiche aufweist. In diesem Falle verformt sich der Reinigungslöffel oder Teile davon in oszillierender Weise, so daß diese Bewegung auf das Reinigungsmittel übertragen wird.

Die Erfindung wird anhand bevorzugter Ausführungsbeispiele weiter erläutert und beschrieben. Es zeigen:
- Fig. 1: einen transversalen Querschnitt durch einen an einen Oberkiefer angesetzten und angepaßten Reinigungslöffel,
- Fig. 2: einen Querschnitt durch einen für einen Unterkiefer ausgebildeten Reinigungslöffel und
- Fig. 3: zwei Halbschnitte von Reinigungslöffeln, die für den Unterkiefer bestimmt sind.

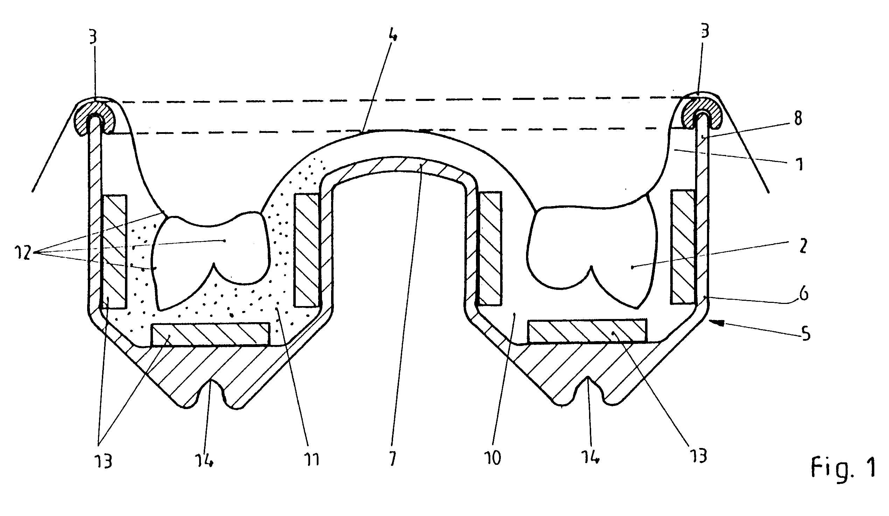

In Fig. 1 ist anhand eines transversalen Querschnittes der Oberkiefer 1 eines Menschen dargestellt, der mit Zähnen 2 besetzt ist. Die räumliche Form des Oberkiefers 1 möge vom Mundvorhof 3 der einen Seite über das Gaumendach 4 zum Mundvorhof 3 auf der anderen Seite verlaufen.

Der Reinigungslöffel 5 weist einen Grundkörper 6 auf, der im wesentlichen die dargestellte mäanderförmige Gestalt besitzt und ansonsten U-förmig ausgebildet ist, so daß er die gesamte Reihe der Zähne 2 umschließt. Im mittleren Bereich weist der Grundkörper eine Abkröpfung 7 auf, die sich nach oben erstreckt. Der umlaufende Rand 8 des Grundkörpers 6 ist mit einer Dichtung 9 aus dauerelastischem Material versehen. Die Dichtung 9 legt sich an den Mundvorhof an und dichtet auch im hinteren Bereich des Gaumendaches rundherum ab, so daß zwischen dem Oberkiefer 1 und den Zähnen 2 von dem Grundkörper 6 des Reinigungslöffels 5 ein Aufnahmeraum 10 umschlossen wird, der mit einem Reinigungsmittel 11, insbesondere einem Gel, gefüllt wird. Auf der Innenseite des Aufnahmeraums 10 des Grundkörpers 6, und zwar relativ zu den zu reinigenden Flächen 12 an den Zähnen 2, zwischen den Zähnen 2 und im Bereich der Mundschleimhaut sind Ultraschallschwinger 13 in Form von piezokeramischen Elementen angeordnet, die auf hier nicht näher dargestellte Weise mit Energie versorgt werden, so daß sie eine schwingende Bewegung auf das Reinigungsmittel 11 und damit über dieses auf die zu reinigenden Flächen 12 ausüben. Es versteht sich, daß die Form des Grundkörpers 6 des Reinigungslöffels und auch der Verlauf der Dichtung 9 individuell an den Patienten anzupassen ist. Dies geschieht mit Hilfe bekannter Abdrucktechnik.

Zur Anwendung wird der Aufnahmeraum 10 mit dem Reinigungsmittel 11 gefüllt und der Reinigungslöffel 5 in den Mund eingeführt und am Oberkiefer angesetzt, so daß der Aufnahmeraum 10 über die Dichtung 9 abgedichtet ist. Anschließend wird das Reinigungsmittel 11 über die Ultraschallschwinger 13 in Bewegung gesetzt, so daß es sich im Aufnahmeraum 10 bewegt und dabei seine Reinigungswirkung an den zu reinigenden Flächen 12 erbringt.

Der Grundkörper 6 des Reinigungslöffels 5 kann auf seiner dem Unterkiefer zugekehrten Unterseite mit Ansetzstellen 14 versehen sein, in die beispielsweise die Seitenzähne des Unterkiefers während des Reinigungsvorganges eingreifen können, um die gezielte dichtende Anpressung der Dichtung 9 am Oberkiefer 1 zu erreichen.

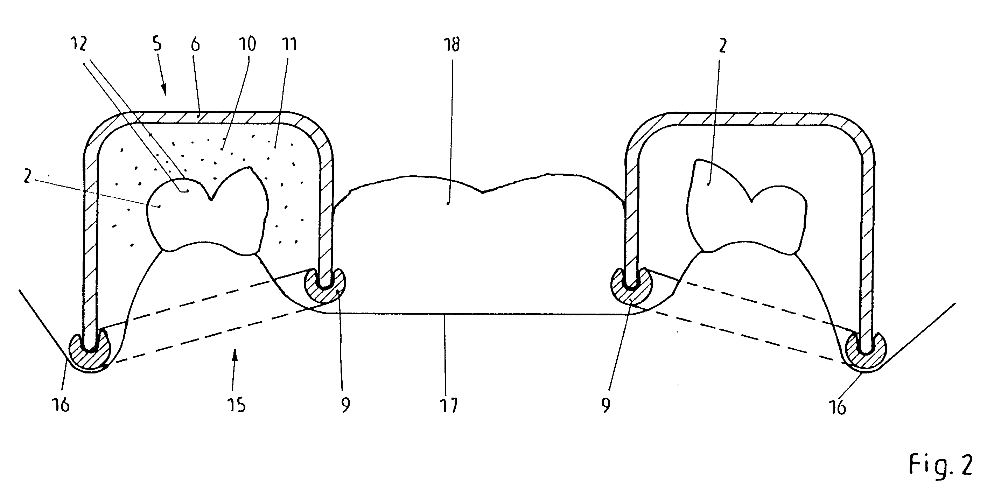

Fig. 2 zeigt einen Reinigungslöffel 5 für den Unterkiefer 15. Der Verlauf über den Mundvorhof 16, den Mundboden 17 bis zum Mundvorhof 16 auf der anderen Seite ist angedeutet. Der Grundkörper 6 des Reinigungslöffels 5 weist hier eine hufeisenartige Gestaltung auf, wobei im Mittelbereich ein Freiraum 18 für die Zunge vorgesehen ist. Die Dichtung 9 ist hier etwas anders angeordnet als bei dem Reinigungslöffel 5 für den Oberkiefer 1. Auch hier wird jedoch der Aufnahmeraum 10 für das Reinigungsmittel 11 dichtend abgeschlossen. Der Grundkörper 6 des Reinigungslöffels 5 kann aus magnetostriktivem Material bestehen oder jedenfalls solche Bereiche aufweisen, die bei entsprechender Energiezufuhr in eine schwingende Bewegung geraten und dabei diese Bewegung über das Reinigungsmittel 11 auf die zu reinigenden Flächen 12 übertragen.

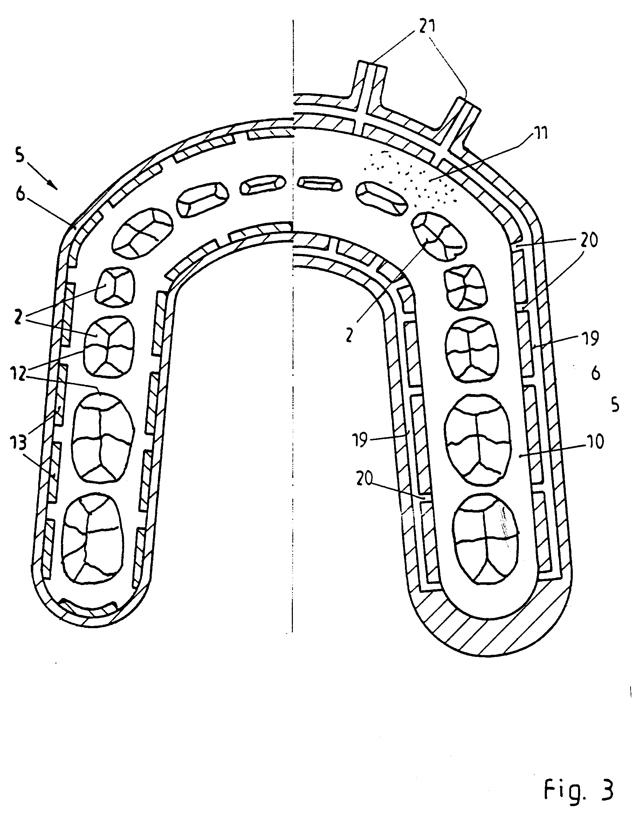

In Fig. 3 sind zwei Halbschnitte mit Draufsicht auf den Unterkiefer dargestellt. In dem linken Halbschnitt ist eine Ausführungsform verdeutlicht, wie sie anhand von Fig. 1 für den Oberkiefer bereits beschrieben worden ist. Hier sind auf der Innenseite des Grundkörpers 6 in relativer Anordnung zu den Zähnen 2 die Ultraschallschwinger 13 vorgesehen.

Der rechte Halbschnitt zeigt einen etwas voluminöser ausgebildeten Grundkörper 6, der von Kanälen 19 durchzogen ist, die in Düsen 20 enden, wobei die Düsen 20 individuell so angeordnet sind, wie dies insbesondere die Zahnzwischenräume individuell erfordern. Die Düsen 20 münden in den Aufnahmeraum 10 für das Reinigungsmittel 11. Die Düsen 20 sind auf beiden Seiten der Zahnreihe vorgesehen. Die Kanäle 19 führen zu mindestens zwei Anschlußstutzen 21, an die über hier nicht dargestellte Leitungen eine Pumpe und ein Reservoir mit Reinigungsflüssigkeit angeschlossen ist. Es versteht sich, daß nach dem Einsetzen des Reinigungslöffels 5 auf den Kiefer die Pumpe im Kreislauf über die Anschlußstutzen 21 angeschlossen wird, so daß die Reinigungsflüssigkeit auf diese Weise in den Aufnahmeraum 10 gelangt und dort ihre reinigende Bewegung ausführt. Der Rücklauf der Flüssigkeit erfolgt über den anderen, nicht dargestellten Anschlußstutzen zur Pumpe.

### BEZUGSZEICHENLISTE

- 1: - Oberkiefer
- 2: - Zahn
- 3: - Mundvorhof
- 4: - Gaumendach
- 5: - Reinigungslöffel
- 6: - Grundkörper
- 7: - Abkröpfung
- 8: - Rand
- 9: - Dichtung
- 10: - Aufnahmeraum
- 11: - Reinigungsmittel
- 12: - Fläche
- 13: - Ultraschallschwinger
- 14: - Ansetzstelle
- 15: - Unterkiefer
- 16: - Mundvorhof
- 17: - Mundboden
- 18: - Freiraum
- 19: - Kanal
- 20: - Düse
- 21: - Anschlußstutzen

## Patentansprüche

1. Vorrichtung zum Entfernen von Zahnbelägen, **dadurch gekennzeichnet**, daß ein Reinigungslöffel (5) vorgesehen ist, der individuell den geometrischen Bedingungen im Mund angepaßt ist und dessen Randbereich mit einer Dichtung (9) versehen ist, daß der Reinigungslöffel (5) im Bereich der zu reinigenden Flächen (12) einen Aufnahmeraum (10) für ein Reinigungsmittel (11) aufweist, und daß ein Antrieb für die Aufbringung einer Bewegung auf das Reinigungsmittel (11) relativ zu den zu reinigenden Flächen (12) vorgesehen ist.

2. Vorrichtung nach Anspruch 1, **dadurch gekennzeichnet**, daß als Antrieb für die Aufbringung einer Bewegung auf das Reinigungsmittel (11) relativ zu den zu reinigenden Flächen (12) ein Ultraschallschwinger (13) oder eine Pumpe vorgesehen ist.

3. Vorrichtung nach Anspruch 1 oder 2, **dadurch gekennzeichnet**, daß der Antrieb für die Aufbringung einer Bewegung auf das Reinigungsmittel (11) relativ zu den zu reinigenden Flächen (12) mit dem Reinigungslöffel (5) dauerhaft verbunden oder an diesen anschließbar ist.

4. Vorrichtung nach Anspruch 1, **dadurch gekennzeichnet**, daß der Aufnahmeraum (10) für das Reinigungsmittel (11) die zu reinigenden Flächen (12) mit geringem Abstand umschließt.

5. Vorrichtung nach Anspruch 1, **dadurch gekennzeichnet**, daß der Reinigungslöffel (5) als Kunststofformkörper ausgebildet ist und die Dichtung (9) aus einer umlaufend angeordneten Lippe aus dauerelastischem Kunststoff, insbesondere Silikon, besteht.

6. Vorrichtung nach Anspruch 1 oder 5, **dadurch gekennzeichnet**, daß ein Reinigungslöffel (5) für den Oberkiefer (1) und ein Reinigungslöffel (5) für den Unterkiefer (15) vorgesehen ist.

7. Vorrichtung nach Anspruch 1, **dadurch gekennzeichnet**, daß als Reinigungsmittel (11) eine Flüssigkeit, ein Gel, eine Paste oder eine Mischung daraus Verwendung findet.

8. Vorrichtung nach Anspruch 1, 2 oder 7, **dadurch gekennzeichnet**, daß der Reinigungslöffel (5) Kammern und Kanäle (19) für die Umwälzung des Reinigungsmittels (11) sowie Düsen (20) für das gezielte Zuleiten des Reinigungsmittels (11) auf die zu reinigenden Flächen (12) aufweist, die mit dem Aufnahmeraum (10) in Verbindung stehen.

9. Vorrichtung nach Anspruch 1, **dadurch gekennzeichnet**, daß auf dem Reinigungslöffel (5) Piezokristalle für die Aufbringung einer Bewegung auf das Reinigungsmittel (11) relativ zu den zu reinigenden Flächen (12) angeordnet sind.

10. Vorrichtung nach Anspruch 1, **dadurch gekennzeichnet**, daß der Reinigungslöffel (5) aus magnetostriktivem Material besteht oder zumindest solche Bereiche aufweist.
